# EUROPÄISCHE PATENTANMELDUNG

(11) **EP 1 057 863 A1**
(43) Veröffentlichungstag der Anmeldung: **06.12.2000**
(21) Anmeldenummer: 00110298.7
(22) Anmeldetag: 24.05.2000
(51) Int. Cl.: C08L 23/04, C08L 23/08

(54) **Transparente, gegen Papier frühsiegelnde polyolefinische Siegelschicht und diese enthaltende Verbundfolie sowie deren Verwendung für heissversiegelte Verpackungsmaterialien**

(30) Priorität: 04.06.1999 DE 19925594
(71) Anmelder: Wolff Walsrode AG, 29655 Walsrode (DE)
(72) Erfinder: Eggers, Holger, Dr., 79100 Freiburg (DE); Gasse, Andreas, Dr., 29664 Walsrode (DE); Neubauer, Dieter, 29699 Bomlitz (DE); Klein, Rudi, 29664 Walsrode (DE)
(74) Vertreter: Pettrich, Klaus-Günter, Dr.

(57) **Zusammenfassung**

Polyolefinische, wenigstens einlagige Siegelschicht mit einer siegelseitig außenliegenden Schicht (I), dadurch gekennzeichnet, daß Schicht (I) eines oder mehrere Polymere, ausgewählt aus der Gruppe umfassend E/VA, PE-LD, PE-HD oder PE-LLD enthält, von denen wenigstens ein Bestandteil mit einem oder mehreren Monomeren einer ethylenisch ungesättigten Carboxylsäure und/oder daraus abgeleiteten Säureanhydriden, Säureestern, Säureamiden und Säureimiden gepfropft ist, so daß der Anteil des Pfropfmonomers zwischen 0,005 und 10 %, bezogen auf das Gesamtgewicht der Schicht (I) beträgt.

Ebenfalls beschrieben werden Verbundfolien, die diese Siegelschicht enthalten sowie deren Verwendung für heißversiegelte Verpackungsmaterialien.

## Beschreibung

Die vorliegende Erfindung betrifft eine transparente Siegelschicht, die trotz einer hohen Erweichungstemperatur eine frühe Versiegelbarkeit gegen Papier aufweist. Die Erfindung betrifft auch Verbundfolien, insbesondere flexible Kunststoffolien, die die Siegelschicht enthalten, sowie die Verwendung der Siegelschicht und/oder der sie enthaltenden Verbundfolien für die Verpackung medizinischer Güter, insbesondere Einwegspritzen, die Herstellung von Containern durch Versiegelung gegen Papier sowie ihre Verwendung auf Thermoform-Füll-Siegel-Maschinen, insbesondere als Muldenfolie.

Viele Bedarfsgüter, insbesondere im medizinischen und Hygienebereich, erfordern einen keimfreien Zustand unmittelbar vor der Benutzung. Ein Beispiel für solche Güter sind Einwegspritzen.

Üblicherweise erfolgt die Gewährleistung eines keimfreien Zustands durch eine keimdichte Verpackung. Nach Verschluß der Verpackung wird diese, beispielsweise mit Ethylenoxid, sterilisiert, um eventuell beim Abpackvorgang eingefangene Keime zu vernichten. Ein geeignetes Medium, welches aufgrund seiner Porosität zwar keine Keime hindurchläßt, aber Gase wie Ethylenoxid passieren läßt, ist Papier.

Verpackungen für sterilisierbare Güter bestehen daher häufig aus einer Papierbahn, die gegen eine sowohl gegen Keime wie auch Gase hochdichte Kunststoffolie versiegelt wird. Dabei wird die Kunststoffolie in vielen Fällen zur Aufnahme des Füllguts zuvor thermisch verformt, d.h. tiefgezogen. Entsprechende Folien bestehen daher im allgemeinen aus ungereckten thermoplastischen Werkstoffen.

Der Verformungsvorgang erfolgt üblicherweise auf Thermoform-Füll-Siegelmaschinen. Hier werden aus einer thermogeformten, d.h. tiefgezogenen, Muldenfolie und einer glatt zulaufenden Deckelfolie, in diesem Fall der Papierbahn, Muldenverpackungen hergestellt. Beide Bahnen werden nach Tiefzug und Applikation des Füllguts in die so hergestellte Mulde miteinander durch Heißsiegelung zu einem geschlossenen Container verbunden. Die Funktionsweise solcher Maschinen sowie der Aufbau auf solchen Maschinen bevorzugt verarbeiteter Folien ist bekannt, z.B. aus The Wiley Encyclopedia of Packaging Technology (Hrg. M. Bakker, D. Eckroth; John Wiley & Sons, 1986) oder Joachim Nentwig: Kunststoff-Folien, Carl Hanser Verlag 1994, München.

Für die thermische Verformung wird die Muldenfolie üblicherweise mittels Vakuum oder Druckluft siegelseitig gegen eine Heizplatte gedrückt und dort erwärmt. Bei diesem Vorgang ist ein zu frühes Erweichen der Siegelschicht von Nachteil, da in solchen Fällen die Heizplatte einen optisch störenden Abdruck auf der Siegelseite der Muldenfolie hinterläßt.

Andererseits werden etwa mit Ethylenoxid sterilisierte Packungen häufig im Anschluß an den Sterilisationsvorgang mit Heißdampf behandelt, um das zur Sterilisation verwendete Gas wieder aus dem Packungsinneren zu entfernen. Trotz der hohen Temperaturen darf hierbei die Mulde nicht zu stark zurückschrumpfen, um das Füllgut nicht zu fest zu umschließen. Ein geringer Rückschrumpf wird jedoch vorzugsweise über hohe Thermoformtemperaturen erreicht.

Folien für die Verpackung von gassterilisierbaren Gütern sollten daher eine möglichst spät erweichenden Siegelschicht aufweisen.

Der Abpackvorgang muß aus ökonomischen Gründen möglichst schnell verlaufen. Die Erwärmung der Siegelnaht geschieht üblicherweise durch Beheizung der Deckelbahn konduktiv durch diese hindurch in die Siegelschicht der Folie. Je niedriger die in der Siegelschicht zur festen Versiegelung erforderliche Temperatur ist, umso schneller kann bei einer gegebenen Temperatur des Siegelwerkzeugs der Siegelvorgang durchgeführt werden.

Folien sollten daher gegen Papier schon bei niedrigen Temperaturen siegelfähige Folien sein.

Eine weitere wichtige Bedingung für einen schnellen Abpackvorgang ist eine hohe Gleitfähigkeit der Siegelseite der Muldenfolie. So darf es beim Einlegen des Füllguts nicht zu einem Haften desselben an der Folie kommen. Vielmehr muß das Füllgut leicht und ohne manuelle Manipulation in die Mulde eingelegt werden können.

Für eine ansprechende Erscheinung der Verpackung sowie eine gute Inspektionsmöglichkeit des Füllgutes ist darüberhinaus eine hohe Transparenz der Muldenfolie erforderlich.

Der relevante Stand der Technik bei tiefziehfähigen, gegen Papier siegelbaren Mehrschichtfolien sowie deren Siegelschichten, insbesondere für die Verpackung von sterilisierbedürftigen Gütern, wird im folgenden dargestellt.

Für die Beschreibung der in den einzelnen Schichten enthaltenen Polymere gilt die Übereinkunft, daß, wenn nicht anderweitig kenntlich gemacht, Kurzzeichen für Kunststoffe nach DIN 7728 bzw. ISO 1043-1987 (E) verwendet werden. Diese Kurzzeichen werden nachfolgend verwendet.

Die Abkürzung HV bedeutet 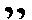 Haftvermittler" und bezeichnet ein Polymer oder eine Polymermischung, die primär der Verbindung zweier benachbarter Schichten dient.

Bei mehrschichtigen Aufbauten wird die Schichtenfolge durch eine Aneinanderreihung der Kurzzeichen der Polymere der entsprechenden Schichten oder anderweitig erläuterter Symbole, voneinander getrennt durch doppelte Schrägstriche, wiedergegeben. Die Seite der Siegelschicht ist dabei stets rechts. Dabei kann auch nur ein Teil der gesamten, die Folie ausmachenden, Schichtenfolge angegeben werden. In diesen Fällen ist ebenfalls die Seite der Siegelschicht stets rechts und nicht angegebene Schichten oder Kombinationen von Schichten durch drei Punkte, ..., kenntlich gemacht. Mischungen aus unterschiedlichen Polymeren werden durch das Kennzeichen + sowie die Zusammenfassung der Komponenten in Klammern, ( ), kenntlich gemacht. Gegebenenfalls können hier zusätzlich Angaben zur prozentualen Zusammensetzung gemacht werden. Wenn nicht anders angegeben handelt es sich in solchen Fällen stets um Gewichtsanteile, die auf das Gesamtgewicht der Mischung bezogen sind. So beschreibt beispielsweise der Ausdruck ...//PA//E/VOH//...//(PE-LD+PE-LLD)//d einen Aufbau mit einer nicht spezifizierten Außenschicht oder außenliegenden Schichtenfolge, gefolgt von einer im wesentlichen aus Polyamid bestehenden Schicht, gefolgt von einer im wesentlichen aus Ethylen/Vinylalkohol-Copolymerisat (E/VOH) bestehenden Schicht, gefolgt von einer nicht spezifizierten Schicht oder Schichtenfolge, gefolgt von einer Schicht, die eine Mischung aus Polyethylen niedriger Dichte (PE-LD) und einem Ethylen/α-Olefin-Copolymerisat (PE-LLD) umfaßt, sowie einer mit d näher zu spezifizierenden, auf der Siegelseite folgenden Schicht.

Die Angabe von Schmelzpunkten bezieht sich im folgenden auf den nach ASTM 3418 mit DSC-Analyse (Differential Scanning Calorimetry Analyse) bestimmten Wert.

WO 96/4861 beschreibt eine tiefziehfähige, gegen Papier peelfähig siegelbare Mehrschichtfolie mit einer Siegelschicht aus 55-95% Polyethylen oder E/VA mit einem Vinylacetatgehalt von bis zu 10 Gewichtsprozent, 0-30% PS und/oder 0-20% SBS oder SIS sowie gegebenenfalls 0-20% PB oder PIB. Für die hier vorliegenden Anforderungen sind solche Folien wegen der ungünstigen optischen Eigenschaften solcher Gemische aus inkompatiblen Polymeren sowie wegen des frühen Erweichens insbesondere von E/VA mit einem erhöhten Anteil an Vinylacetat nicht geeignet.

GB-A-1 144 837 offenbart eine Packung für hypodermisch anzuwendende Nadeln, die eine transparente, gegen Papier zu siegelnde, geformte Folie mit einer vorzugsweise aus Polyethylen bestehenden Siegelschicht enthält. Solche Systeme genügen wegen der hohen erforderlichen Siegeltemperaturen von Polyethylen gegen Papier den hier vorliegenden Anforderungen ebenfalls nicht.

EP-A-713 765 beschreibt mehrschichtige, tiefziehbare und gegen Papier siegelbare Folien, deren Siegelschicht 10-90% PE-LLD sowie 90-10% Copolymerisate aus Ethylen und ungesättigten Carbonsäuren oder Estern umfaßt. Als Vorteile wird eine frühe und feste Versiegelung gegen Papier sowie ein guter Tiefzug im Sinne einer guten Ausformung und eines geringen Heizplattenabdrucks genannt. Solche Systeme weisen jedoch als Nachteile eine zu hohe Trübung, eine zu niedrige Gleitfähigkeit sowie eine wegen der frühen Erweichungstemperaturen der Copolymerisate nach wie vor hohe Neigung zum Heizplattenabdruck auf.

Angesichts des Standes der Technik stellte sich die Aufgabe, eine für die Versiegelung gegen Papier geeignete Siegelschicht bereitzustellen, die über eine hohe Transparenz verfügt, sowie schon bei niedrigen Temperaturen fest gegen Papier siegelt. Zur Vermeidung von Heizplattenabdrücken soll sie darüberhinaus eine hohe Erweichungstemperatur sowie zur erleichterten Applikation des Füllguts eine hohe Gleitfähigkeit aufweisen.

Erfindungsgemäß gelang die Bewältigung der gestellten Aufgabe durch Bereitstellung einer polyolefinischen wenigstens einlagigen Siegelschicht mit einer siegelseitig außenliegenden Schicht (I), die sich dadurch auszeichnet, daß Schicht (I) eines oder mehrere Polymere, ausgewählt aus der Gruppe umfassend E/VA, PE-LD, PE-HD oder PE-LLD enthält, von denen wenigstens ein Bestandteil mit einem oder mehreren Monomeren einer ethylenisch ungesättigten Carboxylsäure und/oder daraus abgeleiteten Säureanhydriden, Säureestern, Säureamiden und Säureimiden gepfropft ist, so daß der Anteil des Pfropfmonomers zwischen 0,005 und 10 %, bezogen auf das Gesamtgewicht der Schicht (I) beträgt.

Schicht (I) enthält in bevorzugter Form Copolymerisate aus Ethylen und Vinylacetat (E/VA) mit einem Vinylacetat-Gehalt, bezogen auf das Gesamtgewicht des Polymers, von höchstens 5%, Polyethylen niedriger Dichte (PE-LD) in einer Dichte von wenigstens 0,91 g/cm³ und höchstens 0,935 g/cm³, Polyethylen hoher Dichte (PE-HD) mit einer Dichte bis zu 0,96 g/cm³ und/oder Copolymerisate (PE-LLD) aus Ethylen und α-Olefinen mit einer Dichte von wenigstens 0,90 g/cm³ und höchstens 0,94 g/cm³ mit wenigstens 3 C-Atomen, beispielsweise Buten, Hexen, Octen oder 4-Methyl- 1 -Penten. Die Copolymerisate (PE-LLD) aus Ethylen und α-Olefinen können mit konventionellen Katalysatoren oder mit Metallocen-Katalysatoren hergestellt sein.

Besonders günstig ist die Verwendung von 33 - 100% PE-LLD und 0 - 67% PE-LD, bezogen auf das Gesamtgewicht der Schicht (I). Eine solche Mischung zeichnet sich durch eine gute Transparenz, einen ausreichend hohen Erweichungspunkt sowie eine leichte Verarbeitbarkeit bei guter Siegelbarkeit zum Papier aus.

In Schicht (I) als Pfropfmonomere oder deren Säurebasis Eingang findende ungesättigte Carboxylsäuren sind beispielsweise Acrylsäure, Maleinsäure, Methacrylsäure, Fumarsäure, Itaconsäure, Citraconsäure oder Mesaconsäure geeignet. Besonders als Pfropfmonomere geeignet sind Säureanhydride, woraus wiederum bevorzugt α,β-einfach ungesättigte Dicarbonsäureanhydride verwendet werden können. Ein insbesondere geeignetes Pfropfmonomeres ist Maleinsäureanhydrid.

Es ist für die Einstellung der gewünschten Siegeleigenschaften vorteilhaft, in Schicht (I) nur ein mit einem Monomer der genannten ungesättigten Carboxylsäuren und/oder daraus abgeleiteten Säureanhydriden, Säureestern, Säureamiden und Säureimiden gepfropftes Polymer zu verwenden.

Als besonders geeignet erweist es sich, ein mit einem Monomer der genannten ungesättigten Carboxylsäuren und/oder daraus abgeleiteten Säureanhydriden, Säureestern, Säureamiden und Säureimiden gepfropftes PE-LD, noch günstiger ein PE-LLD, zu verwenden. Daraus ist ein mit Maleinsäureanhydrid gepfropftes PE-LLD besonders bevorzugt.

Eine günstige Zusammensetzung von Schicht (I) sieht ist die Verwendung von 33 - 100% PE-LLD, welches mit einem Monomer der genannten ungesättigten Carboxylsäuren und/oder daraus abgeleiteten Säureanhydriden, Säureestern, Säureamiden und Säureimiden, insbesondere Maleinsäureanhydrid, gepfropft ist, und 0 - 67% PE-LD, bezogen auf das Gesamtgewicht der Schicht (I), oder die Verwendung von 33 - 100% PE-LLD und 0 - 67% PE-LD, welches mit einem Monomer der genannten ungesättigten Carboxylsäuren und/oder daraus abgeleiteten Säureanhydriden, Säureestern, Säureamiden und Säureimiden, insbesondere Maleinsäureanhydrid, gepfropft ist, bezogen auf das Gesamtgewicht der Schicht (I), vor.

Der Anteil des Pfropfmonomers beträgt, bezogen auf das Gesamtgewicht der Schicht (I), zwischen 0,005 und 10%. Bevorzugt ist ein Anteil zwischen 0,01 und 5%, insbesondere ein Anteil zwischen 0,01 und 1%.

Neben den gepfropften und/oder ungepfropften Polyethylenen und Ethylen-Copolymerisaten aus der Gruppe umfassend E/VA, PE-LD, PE-HD oder PE-LLD kann Schicht (I) weitere polymere Bestandteile enthalten. Beispiele hierfür sind elastomere Verbindungen.

Schicht (I) ist in bevorzugter Form zusätzlich mit Additiven ausgestattet, die die Gleitfähigkeit der Folie verbessern. Beispiele sind als Antiblockmittel bekannte feste anorganische Partikel, die aus der äußeren Oberfläche der Siegelschicht (I) hervortreten. Hierfür geeignet sind Siliziumoxid, Calciumcarbonat, Magnesiumsilikat, Aluminiumsilikat, Calciumphosphat und dergleichen. Bevorzugt kommt daraus Siliciumdioxid zum Einsatz. Wirksame Mengen liegen im Bereich von 100 bis 5000 ppm, vorzugsweise 500 bis 2000 ppm. Die mittlere Teilchengröße liegt zwischen 1 und 10 µm, bevorzugt 2 und 7 µm, wobei hier Teilchen mit kugelförmiger Gestalt besonders geeignet sind.

Andere Additive, die die Gleitfähigkeit der Folie, auch in Zusammenwirken mit den genannten festen Partikeln, verbessern und in einer bevorzugten Form in einer der Lagen der Siegelschicht enthalten sind, sind die üblicherweise als Gleitmittel bezeichneten höheren aliphatischen Säureamide, höhere aliphatische Säureester, Wachse, Metallseifen sowie Polydimethylsiloxane. Die wirksame Menge an Gleitmittel liegt im Bereich von 100 bis 1000 ppm, vorzugsweise 200 bis 500 ppm. Besonders geeignet ist der Zusatz von höheren aliphatischen Säureamiden. Ein insbesondere geeignetes aliphatisches Säureamid ist Erucasäureamid.

Die erfindungsgemäße Siegelschicht kann neben der Schicht (I) zur Unterstützung des Siegelvorgangs und/oder zur Erleichterung der Herstellung und/oder zur rationelleren Verwendung von Rohstoffen gegebenenfalls weitere Schichten aus thermoplastischen Polymeren enthalten. Sie enthalten in bevorzugter Form Polymere oder Mischungen aus Polymeren aus der Gruppe umfassend Copolymerisate aus Ethylen und Vinylacetat (E/VA), besonders bevorzugt mit einem Vinylacetat-Gehalt, bezogen auf das Gesamtgewicht des Polymers, von höchstens 20% , Copolymerisate aus Ethylen und ungesättigten Estern wie Butylacrylat oder Ethylacrylat (E/BA bzw. E/EA), Copolymerisate aus Ethylen und ungesättigten Carbonsäuren (E/AA, E/MAA), besonders bevorzugt mit einem Gehalt des Carbonsäurecomonomers, bezogen auf das Gesamtgewicht des Polymers, von höchstens 15%, in noch weiter bevorzugter Form höchstens 8%, Salze der Copolymerisate aus Ethylen und ungesättigten Carbonsäuren, insbesondere E/MAA, (Ionomere), besonders bevorzugt mit einem Gehalt des Carbonsäurecomonomers, bezogen auf das Gesamtgewicht des Ionomers, von höchstens 15%, in noch weiter bevorzugter Form höchstens 10%, Polyethylen niedriger Dichte (PE-LD), besonders bevorzugt in einer Dichte von wenigstens 0,91 g/cm³ und höchstens 0,935 g/cm³, Polyethylen hoher Dichte (PE-HD), Copolymerisate (PE-LLD) aus Ethylen und α-Olefinen mit wenigstens 3 C-Atomen, beispielsweise Buten, Hexen, Octen, 4-Methyl-1-Penten. Die Copolymerisate (PE-LLD) aus Ethylen und α-Olefinen können mit konventionellen Katalysatoren oder mit Metallocen-Katalysatoren hergestellt sein. Besonders bevorzugt sind daraus Copolymerisate (PE-LLD) aus Ethylen und α-Olefinen mit einer Dichte von wenigstens 0,90 g/cm³ und höchstens 0,94 g/cm³.

Die Erfindung umfaßt auch mehrschichtige Verbundfolien, die die erfindungsgemäße Siegelschicht enthalten. Geeignet sind Verbundfolien mit weiteren Schichten aus Polymeren, Metallen, Papier, Textilien und dergleichen sowie Kombinationen daraus.

Dabei werden Verbundfolien mit weiteren thermoplastischen Schichten, insbesondere solchen in ungereckter Form, bevorzugt. Besonders geeignet sind dabei eine oder mehrere weitere Schichten mit Polymeren ausgewählt aus der Gruppe umfassend Polyamid, Polypropylen und Copolymerisate aus Ethylen und Propylen.

Bevorzugt kommt daraus Polyamid zum Einsatz. Es enthält in bevorzugter Form jeweils eine Mischung aus verschiedenen Polyamiden mit wenigstens 90 Gew.-% Polyamid 6 oder ein Copolyamid mit wenigstens 90 Gew.-% aus ε-Caprolactam gebildeter Einheiten. Neben Polyamid 6 können Polyamide ausgewählt aus der Gruppe umfassend Polyamid 10, Polyamid 12, Polyamid 66, Polyamid 610, Polyamid 6I, Polyamid 612, Polyamid 6/66, Polyamid 6I/6T, Polyamid MXD6, Polyamid 6/6I, Polyamid 6/6T, Polyamid 6/IPDI oder andere aliphatische oder aromatische Homo- und Copolyamide oder Mischungen daraus verwendet werden. Als besonders günstig erweist es sich, neben Polyamid 6 kein weiteres Polyamid zu verwenden.

Günstig ist auch die Verwendung von Polypropylen sowie Copolymerisaten aus Ethylen und Propylen mit einem Gehalt an ethylenischen Bestandteilen von bis zu 10 %, bezogen auf die molare Zusammensetzung des Copolymeren.

Eine solchermaßen ausgeführte Schicht sorgt für eine hohe Durchstichfestigkeit der erfindungsgemäßen Verbundfolien sowie für einen geringen Rückschrumpf nach dem Tiefzug derselben.

Aufbauten der als Mehrschichtfolie ausgeführten, die erfindungsgemäße Siegelschicht mit Schicht (I) enthaltenden, Verbundfolien können wie folgt lauten:
1.) PA//(I)
2.) PA//HV//(I)
3.) PA//...//(I)
4.) PA//HV//PA//(I)
5.) PA//HV//PA//...(I)
6.) PE//HV//PA//(I)
7.) PE//HV//PA//...//(I)
8.) PP//HV//PA//(I)
9.) PP//HV//PA//...//(I)
10.) PP//(I)
11.) PP//HV//(I)
12.) PP//...//(I)
13.) PP//HV//PP//(I)
14.) PP//HV//PP//...(I)
15.) PE//HV//PP//(I)
16.) PE//HV//PP//...//(I)
17.) PA//HV//PP//(I)
18.) PA//HV//PP//...//(I)
19.) E/P//(I)
20.) E/P//HV//(I)
21.) E/P//...//(I)
22.) E/P//HV//E/P//(I)
23.) E/P//HV//E/P//...(I)
24.) PE//HV//E/P//(I)
25.) PE//HV//E/P//...//(I)
26.) PA//HV//E/P//(I)
27.) PA//HV//E/P//...//(I)
28.) E/P//HV//PA//(I)
29.) E/P//HV//PA//...//(I)
30.) PA//PE//(I)
31.) PA//HV//PE//(I)
32.) PA//...//PE//(I)
33.) PA//HV//PA//PE//(I)
34.) PA//HV//PA//...//PE//(I)
35.) PE//HV//PA//PE//(I)
36.) PE//HV//PA//...//PE//(I)
37.) PP//HV//PA//PE//(I)
38.) PP//HV//PA//...//PE//(I)
39.) PP//E/VA//(I)
40.) PP//E/VA//PE//(I)
41.) PP//HV//PE//(I)
42.) PP//...//PE//(I)
43.) PP//HV//PP//E/VA//(I)
44.) PP//HV//PP//...//PE//(I)
45.) PE//HV//PP//E/VA//(I)
46.) PE//HV//PP//...//PE//(I)
47.) PA//HV//PP//E/VA//(I)
48.) PA//HV//PP//...//PE//(I)
49.) E/P//E/VA//(I)
50.) E/P//E/VA//PE//(I)
51.) E/P//HV//PE//(I)
52.) E/P//...//PE//(I)
53.) E/P//HV//E/P//E/VA//(I)
54.) E/P//HV//E/P//...//PE//(I)
55.) PE//HV//E/P//E/VA//(I)
56.) PE//HV//E/P//...//PE//(I)
57.) PA//HV//E/P//E/VA//(I)
58.) PA//HV//E/P//...//PE//(I)
59.) E/P//HV//PA//E/VA//(I)
60.) E/P//HV//PA//...//PE//(I)

Bevorzugte sind darunter die Aufbauten 2, 3, 5, 11, 12, 20 und 21.

Die Gesamtdicke der als Mehrschichtfolie ausgeführten erfindungsgemäßen Verbundfolien liegt zwischen 40 µm und 300 µm, bevorzugt zwischen 50 µm und 200 µm.

Die erfindungsgemäße Siegelschicht sowie sie enthaltende erfindungsgemäße mehrschichtige Verbundfolien lassen sich auf üblichen Anlagen zur Produktion von Folien bzw. Mehrschichtfolien herstellen.

Dabei besteht die Möglichkeit, alle oder einen Teil der Schichten gemeinsam zu coextrudieren, d.h. die Polymere dieser Schichten als Schmelzeströme zusammenzuführen und in geschmolzener Form durch eine gemeinsame Düse strömen zu lassen. Die erfindungsgemäßen Verbundfolien lassen sich aber auch durch Extrusionsbeschichtung, das heißt durch Auftrag wenigstens der Schicht (I) in geschmolzenem Zustand auf eine Trägerbahn, herstellen. Werden Trägerbahn und Siegelschicht enthaltend Schicht (I) getrennt vorgefertigt, so können sie auch durch Verwendung eines Kaschierklebstoffs verbunden werden. Der gesamte Verbund oder Teilverbunde, sofern als polymere Mehrschichtfolie ausgeführt, können dabei sowohl mit der Blasfilm- als auch der Flachfilmtechnologie hergestellt werden.

Mit der erfindungsgemäßen Siegelschicht gelingt es überraschenderweise, Verbundfolien bereitzustellen, die eine sehr niedrigen Siegelanspringtemperatur bei der Versiegelung gegen Papier mit hohen Erweichungstemperaturen kombinieren. Somit können sie ohne bleibende Beeinträchtigung etwa durch Heizplattenabdrücke auf Thermoform-Füll-Siegel-Maschinen auf sehr hohe Temperaturen aufgeheizt werden und somit bei überraschend hohen Maschinentaktzahlen zu einer sehr rückschrumpfarmen Mulde verformt werden. Die Versiegelung kann wegen der niedrigen erforderlichen Siegeltemperaturen ebenfalls mit hoher Taktzahl erfolgen.

Gegenüber gegen Papier ebenfalls frühsiegelnden Verbunden nach dem Stand der Technik zeichnen sich die erfindungsgemäße Siegelschicht enthaltenden Verbundfolien zusätzlich durch eine hohe Gleitfähigkeit aus. Überraschend ist ebenfalls die ausgezeichnete Transparenz der erfindungsgemäßen Siegelschicht.

Ein weiterer Vorteil der erfindungsgemäßen Siegelschicht und der sie enthaltenden Verbundfolien ist die einfache und rationelle Produzierbarkeit. So kann die Siegelschicht etwa durch einfache Coextrusion mit Polyamid oder Polypropylen oder Ethylen/Propylen-Copolymerisaten hergestellt werden, ohne daß es zusätzlicher verbindender Schichten bedarf.

Die erfindungsgemäße Siegelschicht und die diese enthaltenden Verbundfolien eignen sich damit in besonderem Maße Für die Versiegelung gegen Papier sowie die Verwendung als Muldenfolie. Insbesondere ist sie in hervorragender Weise für die Anwendung als Muldenfolie für die Verpackung von zu sterilisierenden Gütern, insbesondere im medizinischen und im Hygienebereich geeignet.

Ein weiterer Gegenstand der Erfindung ist daher auch die Verwendung der erfindungsgemäßen Siegelschicht und sie enthaltender Folienverbunde als Mulden- oder Deckelfolie auf Thermoform-Füll-Siegelmaschinen, die Verwendung für die Versiegelung gegen Papier sowie die Verwendung für die Herstellung von Verpackungsmaterial, bevorzugt für die Verpackung medizinischer Artikel, insbesondere von Einwegspritzen.

Die folgenden Beispiele stehen beispielhaft für die erfindungsgemäße Siegelschicht und sie enthaltende Verbundfolien. Die verwendeten Polymere sind handelsübliche Qualitäten.

### Beispiele

### Beispiel 1:

Struktur (80% PA6 + 20% PA6I6T)//(I) in der Dicke 25//75 µm mit einer Siegelschicht (I) bestehend aus 35% Tymor 1228 B der Firma Morton sowie 65% Lupolen 2420F der Firma Elenac. Tymor 1228 B ist ein Haftvermittler auf Basis von mit Maleinsäureanhydrid gepfropftem PE-LLD der Dichte 920 g/cm³. Lupolen 2420 F ist ein PE-LD in der Dichte 923 g/cm³. Die Siegelschicht (1) wurde zusätzlich mit 1000 ppm eines natürlichen SiO₂ sowie 500 ppm Erucasäureamid versetzt. Die Struktur wurde als Blasfolie durch Coextrusion hergestellt.

### Vergleichsbeispiel 2:

Eine Struktur PA6//Kleber//(I) in der Dicke 40//1//60 µm mit einer Siegelschicht (I) bestehend aus E/VA mit einem Vinylacetatgehalt von 3,5% wurde durch Klebstoffkaschierung auf üblichem Wege als Flachfolie hergestellt. Die Siegelschicht (I) wurde zusätzlich mit 1000 ppm eines natürlichen SiO₂ sowie 700 ppm Erucasäureamid versetzt.

### Vergleichsbeispiel 3:

Eine Struktur (80% PA6 + 20% PA6I6T)//HV//(I) in der Dicke 25//10//65 µm wurde wie in Beispiel 1 durch Coextrusion als Blasfolie hergestellt. Der verwendete Haftvermittler war Tymor 1228 B aus Beispiel 1, die Siegelschicht bestand entsprechend EP 713 765 aus 80% des PE-LLD Stamylex 4046 F der Firma DSM (Dichte 940 g/cm³) und 20% des E/MAA Nucrel 0609 HSA mit 6% Methacrylsäure der Firma DuPont.

An den gefertigten Mustern wurden die folgenden physikalischen und anwendungstechnischen Eigenschaften wie folgt gemessen:
- Die Trübung nach ASTM D 1003.
- Das Reibungsverhalten nach DIN 53 375. Gemessen wird der Reibkoeffizient für die Haftreibung zwischen Folie und Folie. Es wird stets die Seite der Schicht (I) der beispielhaften Folien untersucht.
- Die Beurteilung der Tiefzieh- und Versiegelbarkeit erfolgte an einer Tiefziehmaschine vom Typ Tiromat 3000 der Fa. Alfa Laval. Die Folien wurden bei einer Tiefziehtemperatur von 110°C geformt, d.h. eine Beheizung erfolgte durch Kontakt mit einer auf 110°C temperierten Heizplatte. Die Versiegelung wurde bei einer Temperatur von 140°C über eine Zeit von 1,5 Sekunden durchgeführt. Es wurde notiert, ob auf der Folie ein Heizplattenabdruck zu erkennen war und ob die Versiegelung gegen Papier ausreichend hoch war, so daß sich die Papierbahn nicht versehentlich von der Folie lösen konnte.

An dem erfindungsgemäßen Beispiel sowie an den Vergleichsbeispielen wurden die folgenden physikalischen und anwendungstechnischen Eigenschaften gemessen:

| Merkmal | Einheit | Beispiel 1 | Vgl. 2 | Vgl. 3 |
|---|---|---|---|---|
| Haftreibkoeffizient Folie/Folie auf der Siegelseite | [1] | 0,18 | 0,15 | 0,41 |
| Trübung | [%] | 8 | 7 | 15 |
| Heizplattenabdruck? | ja/nein | nein | nein | ja |
| Feste Versiegelung gegen Papier? | ja/nein | ja | nein | ja |

## Patentansprüche

1. Polyolefinische, wenigstens einlagige Siegelschicht mit einer siegelseitig außenliegenden Schicht (I), dadurch gekennzeichnet, daß Schicht (I) eines oder mehrere Polymere, ausgewählt aus der Gruppe umfassend E/VA, PE-LD, PE-HD oder PE-LLD enthält, von denen wenigstens ein Bestandteil mit einem oder mehreren Monomeren einer ethylenisch ungesättigten Carboxylsäure und/oder daraus abgeleiteten Säureanhydriden, Säureestern, Säureamiden und Säureimiden gepfropft ist, so daß der Anteil des Pfropfmonomers zwischen 0,005 und 10 %, bezogen auf das Gesamtgewicht der Schicht (I) beträgt.

2. Siegelschicht nach Anspruch 1, dadurch gekennzeichnet, daß Schicht (I) eines oder mehrere Polymere, ausgewählt aus der Gruppe umfassend Copolymerisate aus Ethylen und Vinylacetat (E/VA) mit einem Vinylacetat-Gehalt, bezogen auf das Gesamtgewicht des Polymers, von höchstens 5%, Polyethylen niedriger Dichte (PE-LD) in einer Dichte von wenigstens 0,91 g/cm³ und höchstens 0,935 g/cm³, Polyethylen hoher Dichte (PE-HD) mit einer Dichte bis zu 0,96 g/cm³ und/oder Copolymerisate (PE-LLD) aus Ethylen und α-Olefinen mit einer Dichte von wenigstens 0,90 g/cm³ und höchstens 0,94 g/cm³ mit wenigstens 3 C-Atomen, beispielsweise Buten, Hexen, Octen oder 4-Methyl- 1 -Penten, die mit konventionellen Katalysatoren oder mit Metallocen-Katalysatoren hergestellt sein können, enthält.

3. Siegelschicht nach einem der Ansprüche 1 bis 2, dadurch gekennzeichnet, daß Schicht (I) von 33 - 100% PE-LLD und 0 - 67% PE-LD, bezogen auf das Gesamtgewicht der Schicht (I) enthält.

4. Siegelschicht nach einem der Ansprüche 1 bis 3, dadurch gekennzeichnet, daß Schicht (I) Säureanhydride als Pfropfmonomere enthält.

5. Siegelschicht nach Anspruch 4, dadurch gekennzeichnet, daß Schicht (I) Maleinsäureanhydrid als Pfropfmonomer enthält.

6. Siegelschicht nach einem der Ansprüche 1 bis 5, dadurch gekennzeichnet, daß Schicht (I) nur ein gepfropftes Polymer enthält.

7. Verbundfolien, dadurch gekennzeichnet, daß sie eine Siegelschicht gemäß einem der Ansprüche 1 bis 6 enthalten.

8. Verbundfolien nach Anspruch 7, dadurch gekennzeichnet, daß sie thermoplastische Schichten enthalten.

9. Verbundfolien nach Anspruch 8, dadurch gekennzeichnet, daß sie ungereckte thermoplastische Schichten ausgewählt aus der Gruppe umfassend Polyamid, Polypropylen und Copolymerisate aus Ethylen und Propylen enthalten.

10. Verwendung einer Siegelschicht gemäß einem der Ansprüche 1 bis 6 oder einer Verbundfolie gemäß einem der Ansprüche 7 bis 9 zur Heißversiegelung gegen eine Papieroberfläche.

11. Verwendung einer Siegelschicht gemäß einem der Ansprüche 1 bis 6 oder einer Verbundfolie gemäß einem der Ansprüche 7 bis 9 zur Herstellung von Containern auf Form-Füll-Siegel-Maschinen.

12. Verwendung einer Siegelschicht gemäß einem der Ansprüche 1 bis 6 oder einer Verbundfolie gemäß einem der Ansprüche 7 bis 9 zur Herstellung heißversiegelbarer Verpackungsmaterialien.

13. Verwendung nach Anspruch 12, dadurch gekennzeichnet, daß die Verpackungsmaterialien zur Verpackung medizinischer Artikel eingesetzt werden.
